# EUROPEAN PATENT SPECIFICATION

(11) **EP 4 434 149 B1**
(45) Date of publication and mention of the grant of the patent: **16.09.2026**
(21) Application number: 22814423.4
(22) Date of filing: 11.11.2022
(51) Int. Cl.: H02K 15/24, H02K 15/35

(54) **METHOD AND DEVICE FOR THE ALIGNMENT OF CONDUCTIVE ELEMENTS OF INDUCTIVE WINDINGS**
VERFAHREN UND VORRICHTUNG ZUR AUSRICHTUNG VON LEITFÄHIGEN ELEMENTEN VON INDUKTIVEN WICKLUNGEN
PROCÉDÉ ET DISPOSITIF POUR L'ALIGNEMENT D'ELEMENTS CONDUCTEURS D'ENROULEMENTS INDUCTIFS

(30) Priority: 16.11.2021 IT 202100028979
(43) Date of publication of application: 25.09.2024
(73) Proprietor: ATOP S.p.A., 50028 Barberino Tavarnelle (IT)
(72) Inventor: CORBINELLI, Rubino, 53036 Poggibonsi Frazione Staggia Senese (IT); CALVO, Giovanni, 50028 Barberino Tavarnelle (IT)
(74) Representative: Modiano, Micaela Nadia
(86) International application number: PCT/EP2022/081609
(87) International publication number: WO 2023/088802

(56) References cited:
- EP-B1- 2 684 283
- DE-A1- 102018 107 598
- JP-A- 2015 171 260

## Description

The present invention relates to a method and a device for the alignment of conductive elements of inductive windings: in particular the device is adapted to execute alignment operations on conductive elements (conductors of electricity, i.e. that are electrically conductive) that constitute the inductive windings (or spools) of electric machines, such as motors, generators and, in general, any other type of electric machine.

The device according to the invention will be adapted to be used in a system that carries out processes of stable coupling (for example through mutual welding) of the ends of pairs of conductive elements, in which each conductive element will form part of an inductive spool and will be shaped like a fork. Such conductive elements are inserted into the slots of a core of an electric machine, and in the jargon used in the sector they are normally called "hairpins". The fork has two straight shanks which are mutually connected at one end by a bridge-like cross-piece. Overall the forks are shaped approximately like an upturned U with the bridge shaped like a cusp. Each shank has a free end for inserting the fork into the slots of a core, such as an inductor or an armature of an electric machine.

The insertion occurs by inserting the free ends of the conductive elements through longitudinal openings of the slots and making them slide until they come out at the other end of the ferromagnetic core, until a predefined external protrusion of the shanks is reached. So at one end of the ferromagnetic core, the bridges of the forks remain outside, while at the other end of the ferromagnetic core the free ends remain outside.

After insertion, the free ends are bent in order to be arranged in predetermined positions, at which they are connected with other free ends of other conductive elements (forks) via welding. The welding operation can occur by heating using a heating element, or with a laser beam striking the heads of two free ends arranged adjacently in order to be connected: the melting of the material of the two heads generates a connecting joint that complies with the required mechanical and electrical characteristics, and therefore closes the circuit of the inductive winding according to a predefined electrical diagram. The free ends of separate conductive elements must therefore be arranged according to criteria for mutual alignment that make the welding operations simple and which ensure a high stability of the coupling. For the manufacture of inductive windings of electric machines of recent design (which are increasingly optimized), it has become necessary to revise the apparatuses and processes that perform the alignment of the free ends, as they require a high level of precision in the positioning of the free ends, which is necessary for their correct welding.

For the alignment of the free ends of the conductive elements, the use is known of an apparatus (and method) according to the teachings of EP2684283.

Such apparatus makes it possible to obtain an optimal alignment of the free ends of the conductive elements, by way of respective clamping elements that clamp them while mutually aligning and compacting them (clamping according to a tangential stroke, and clamping according to a radial stroke).

In order to enable the correct coupling of the free ends, their length is normally such as to protrude from the clamping elements of the apparatus described in EP2684283, so that they can be coupled (for example by mutual welding).

This therefore results in the need to increase the overall space occupation of the inductive windings (by virtue of the necessary protruding of the free ends from the clamping elements), in contrast with the requirements of end users, who need the best optimization of spaces.

Containment of space occupation can possibly be achieved by minimizing the thickness of the clamping elements (for example of the type described in EP2684283), but this makes such components more delicate, with consequent increase in the onset of related faults and malfunctions.

The aim of the present invention is to solve the above mentioned drawbacks, by providing a method for the alignment of conductive elements of inductive windings that facilitates the subsequent operations of coupling the heads of the free ends of the conductive elements.

Within this aim, an object of the invention is to provide a method and a device for the alignment of conductive elements of inductive windings that can operate on the free ends of conductive elements of reduced length.

Another object of the present invention is to provide a device for the alignment of conductive elements of inductive windings that is provided with clamping elements that offer good mechanical strength.

Another object of the invention is to provide a device for the alignment of conductive elements of inductive windings that is provided with clamping elements that are less prone to faults and malfunctions.

Another object of the invention is to provide a method and a device for the alignment of conductive elements of inductive windings that ensure the production of windings with reduced space occupation.

Another object of the invention is to provide a method and a device for the alignment of conductive elements of inductive windings that allow to easily proceed with the mutual welding of the terminal heads of the free ends of the conductive elements, while the free ends are locked together in a predefined configuration of mutual alignment.

Another object of the present invention is to provide a method and a device for the alignment of conductive elements of inductive windings which is of low cost, easily and practically implemented, and safe in use.

This aim and these and other objects that will become more apparent hereinafter are achieved by the method according to claim 1.

Such aim and such objects are also achieved by the device according to claim 7.

Further characteristics and advantages of the invention will become better apparent from the detailed description that follows of a preferred, but not exclusive, embodiment of the method and of the device for the alignment of conductive elements of inductive windings, which is illustrated by way of non-limiting example in the accompanying drawings wherein:
Figure 1 is a schematic perspective view of free ends of mutually welded conductive elements;
Figure 2 is a schematic perspective view of the shape structure of a conductive element of an inductive winding of a ferromagnetic core;
Figure 3 is a schematic view from above of a device according to the invention in a first operating step;
Figure 4 shows the detail marked IV in Figure 3;
Figure 5 is a schematic view from above of a device according to the invention in a second operating step;
Figure 6 shows the detail marked VI in Figure 5;
Figure 7 is a schematic view from above of a device according to the invention in a third operating step;
Figure 8 shows the detail marked VIII in Figure 7;
Figure 9 is a schematic view from above of a device according to the invention in a fourth operating step;

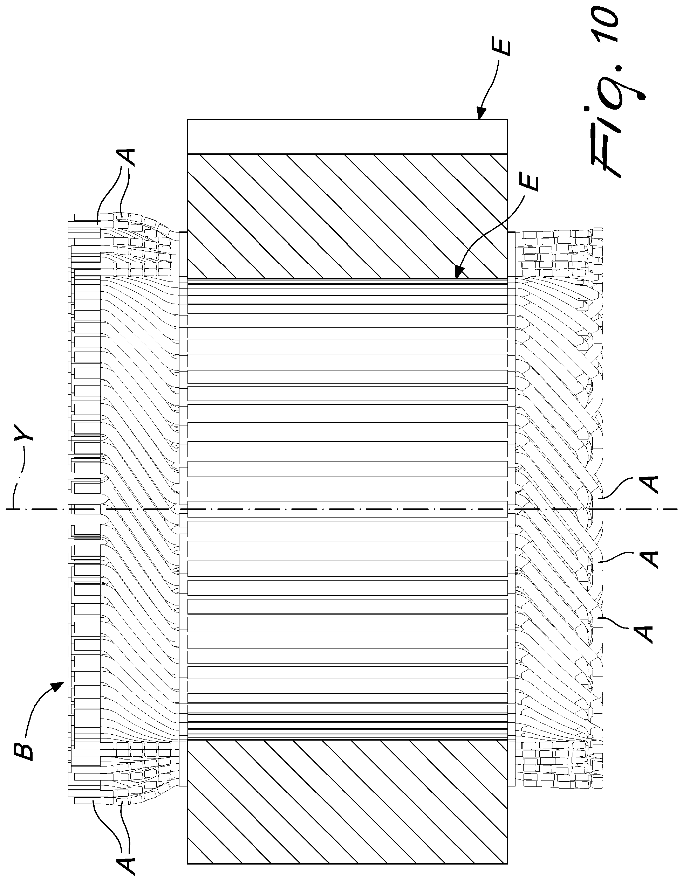

Figure 10 is a schematic side view of a ferromagnetic core which accommodates conductive elements that are operated with the method according to the invention.

With reference to the figures, the reference numeral 1 generally designates a device for the alignment of conductive elements A of inductive windings. The term "conductive elements" A in the present discussion is used to encompass any component made of electrically conducting material, such as, for example, copper, aluminum and other metals and alloys thereof.

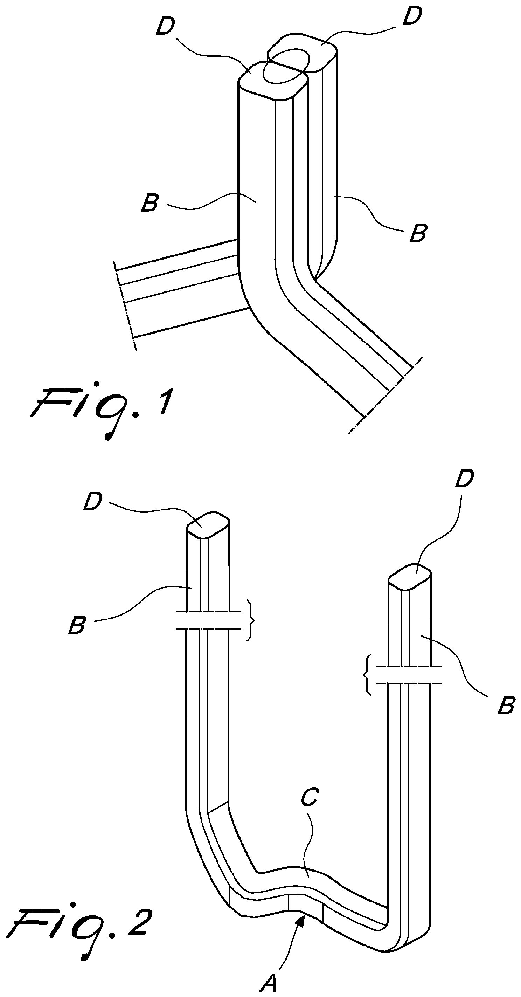

In particular, the conductive elements A can be shaped as shown in Figure 1, i.e. assuming the shape known in the jargon of the sector as a "hairpin" .

The conductive elements A are accommodated at least partially in the slots of a ferromagnetic core E (for example the stator or the rotor of an electric machine): the free ends B of the conductive elements A will protrude at one end, with respect to the ferromagnetic core E, and a central connecting portion C will protrude at the other end.

The inductive winding will be completed via the mutual coupling the heads D of the free ends B of the conductive elements A: such coupling can be achieved using various different techniques (as will be explained below). Figure 2 shows, solely for the purposes of non-limiting example, two mutually welded heads D: in such case, any type of welding can be used; it has been found experimentally that excellent results in coupling can be obtained using laser welding (in particular with a fiber laser), although, as indicated above, the possibility is not ruled out of also adopting different welding techniques.

The coupling method is applied to a ferromagnetic core E (for example the stator or the rotor of an electric machine), in which groups (for example pairs, in line with what is shown by way of non-limiting example in Figure 2) of conductive elements A are beforehand accommodated in respective slots, keeping corresponding first ends B of the elements A protruding from a terminal opening of each slot.

The ferromagnetic core E will have a generally axial-symmetrical shape structure and therefore a longitudinal axis of symmetry Y will be identified in it.

The method according to the invention entails a first step of clamping each group of conductive elements A in order to align the respective free ends B according to a radial direction, using alignment means 2. Such alignment means 2 will perform their clamping according to a predefined angular stroke, on a plane that is perpendicular to the central axis of symmetry Y. With particular reference to a specific embodiment, referring to the configuration assumed by the free ends B of the conductive elements A as shown by way of non-limiting example in the accompanying figures, it can also be seen that the clamping performed by the alignment means 2 can occur on a plane that is perpendicular to the longitudinal axes of the heads D of the free ends B of each group (the longitudinal axes of the heads D are in fact parallel to the axis of symmetry Y).

An additional step entails clamping each group of conductive elements A in order to compact the respective free ends B according to a radial direction, using compaction means 3.

Such radial compaction means 3 will perform the clamping of the first ends B of each group according to a radial direction, i.e. directed radially with respect to the outline of the ferromagnetic core E from which such free ends B protrude, acting on a plane that is perpendicular to the axis of symmetry Y.

The method according to the invention can be applied indifferently, performing first the tangential clamping with the alignment means 2 and then the clamping in a radial direction with the radial compaction means 3 or vice versa.

From a practical point of view, it will be convenient to have a first, incomplete clamping with either the alignment means 2 or the compaction means 3, followed by the subsequent partial clamping with the other means up until an ideal compaction of the heads D of the free ends B of each group is achieved, with the aim of preventing the complete clamping of either the alignment means 2 or the compaction means 3 from impeding the execution of an alignment/compaction via the other one of either the compaction means 3 or the alignment means 2.

The ideal clamping sequence of the groups of first ends B of the conductive elements A using the alignment means 2 and the compaction means 3 is described exhaustively in Patent No. EP2684283 in the name of the same Applicant.

The method then entails removing either the alignment means 2 or the compaction means 3, moving it to a distance from the ferromagnetic core E that is greater than the operating space occupation of the apparatuses for coupling the respective heads D of the free ends B of each group of conductive elements A, keeping the groups clamped using only the other one of either the compaction means 3 or the alignment means 2.

In particular it will then be possible to proceed with the removal of the alignment means 2, leaving each group to remain clamped by the compaction means 3, or it will then be possible to proceed with the removal of the compaction means 3, leaving each group to remain clamped by the alignment means 2.

As will be described in detail below, the possibility is not ruled out that, at the end of the method according to the invention, it could optionally be possible to mutually couple the heads D of the free ends B of each group, given that they will be protruding with respect to the only alignment means that clamp it.

More specifically, for example, the removal of the alignment means 2 will ensure that the heads D protrude from the compaction means 3, which clamp them, by a length at least equal to the thickness of the alignment means 2. Conversely, however, the removal of the compaction means 3 will ensure that the heads D protrude from the alignment means 2, which clamp them, by a length at least equal to the thickness of the compaction means 3.

It should be noted that the optional step of mutual coupling of the heads D of the free ends B of groups of conductive elements A advantageously uses a technique chosen from welding, clamping with a vise, clamping with a rivet, clamping with threaded means, clamping with a perimetric ring.

The mutual coupling of the heads D must be such as to ensure an optimal electrical connection between them (so as to allow the free circulation of an electric current through it) and also a good level of mechanical strength and stability thereof (for example high resistance to tearing).

The use of vises, rivets, threaded means and clamping rings is reserved for specific embodiments.

In the vast majority of cases, the heads D will be mutually welded, and this can be carried out in various ways, including by way of non-limiting example laser welding (in particular welding with a fiber laser).

It should be noted that the step of removing one of the means 2, 3 (be it the means 2 or the means 3), to release the heads D of the free ends B of the groups of conductive elements A, implies a movement of one of such means to a distance from the ferromagnetic core E that is greater than the operating space occupation of any apparatuses used during the optional step of coupling heads D.

It should be noted that, with particular reference to a possible embodiment of the method according to the invention, the step of removing can advantageously consist in the movement of the alignment means 2 to a distance from the ferromagnetic core E that is greater than the operating space occupation of any apparatuses used during the optional step of coupling heads D of the first ends B, while the compaction means 3 positively will clamp such terminal ends B of the conductive elements A of the respective group; such clamping of the terminal ends B of elements of a same group performed by the compaction means 3 can occur, in an embodiment illustrated exclusively for the purposes of non-limiting example, downstream of the cited heads D.

With reference on the other hand to an additional embodiment of the method according to the invention, the step of removing can conveniently consist in the movement of the compaction means 3 to a distance from the ferromagnetic core E that is greater than the operating space occupation of the apparatuses used during the optional step of coupling the heads D of the first ends B, while the alignment means 2 profitably will clamp such terminal ends B of the conductive elements A of the respective group; in this case too, such clamping of the terminal ends B of elements of a same group performed by the compaction means 3 can occur, in an embodiment illustrated exclusively for the purposes of non-limiting example, downstream of the cited heads D.

It should be noted that, in conformance with what is already explained in part above, the step of clamping each group of conductive elements A using compaction means 3 can usefully be activated before the completion of the step of clamping each group of conductive elements A using alignment means 2: in this manner, the ends B will not be mutually locked together by the alignment means 2 and they can effectively be compacted (according to a radial direction) by the compaction means 3.

However, the possibility is not ruled out of an embodiment in which the step of clamping each group of conductive elements A using alignment means 2 is positively activated before the completion of the step of clamping each group of conductive elements A using compaction means 3: in this manner, the ends B will not be mutually locked together by the compaction means 3 and they can effectively be aligned (along a tangential direction) by the alignment means 2.

As already partially explained above, the method according to the invention can also comprise an effective step of coupling conductive elements A of inductive windings of a ferromagnetic core E. In particular such step of coupling, which will be performed at the end of a method for alignment and compaction of the type explained thus far, will entail performing an additional step of mutually coupling the heads D of free ends B of each group of conductive elements A that are protruding from the only compaction means 3 or alignment means 2 that clamps them.

Such step of mutual coupling of the heads D of the free ends B of groups of conductive elements A can profitably comprise a technique chosen from welding, clamping with a vise, clamping with a rivet, clamping with threaded means, clamping with a perimetric ring.

The present invention also extends its protection to include to a device 1 for the alignment and the compaction of conductive elements A of inductive windings which protrude from a ferromagnetic core E (with a shape structure such as to identify a longitudinal axis of symmetry Y).

The device 1 according to the invention comprises alignment means 2 which are configured for the alignment according to a respective radial direction of the free ends B that form each group, and compaction means 3 which are configured for the compaction along a specific radial direction of the free ends B of the conductive elements A that form each group, with consequent juxtaposition of their proximate and facing surfaces. The compaction means 3, in practice, compact the free ends B according to a predefined radial direction so as to juxtapose their mutually facing lateral surfaces.

A possible embodiment of a device of this type is illustrated in EP2684283 in the name of this same applicant.

As specified, the device 1 according to the invention comprises at least one movement element 2a, 3a: in particular it comprises a movement element 2a which is associated with the alignment means 2 (and is adapted to move them) and a movement element 3a which is associated with the compaction means 3 (and is adapted to move them).

The device 1 according to the invention comprises at least one movement element 2a, 3a for moving only one of either the alignment means 2 or the compaction means 3 between a first configuration, of substantial overlap on the other one of either the compaction means 3 or the alignment means 2, in which the alignment means 2 and the compaction means 3 respectively perform the alignment and the radial compaction of the free ends B of the conductive elements A, and a second configuration, of being spaced apart from the other one of either the compaction means 3 or the alignment means 2, in which the alignment means 2 or the compaction means 3 that was moved by the movement element 3a, 2a is moved to a distance, from the compaction means 3 or from the alignment means 2 that was not moved by the movement element 3a, 2a, that is greater than the operating space occupation of the apparatuses for coupling the heads D.

According to the invention, the compaction means 3 or the alignment means 2 that were not moved by the movement element 3a, 2a are configured to continue to keep clamped the groups of ends B of the elements A that were aligned (in particular according to a radial direction) and compacted, while the movement element 2a, 3a is brought to the second arrangement.

The device 1 according to the invention will therefore be adapted to carry out the method described previously (and subsequently claimed in claim 1 and its dependent claims).

The movement element 2a, 3a can advantageously be constituted by any actuator that is adapted to the removal of the component with which it is associated (whether it is constituted by the alignment means 2 or by the compaction means 3). The path of removal (movement) of the component can be any (according to the specific operating requirements): for this reason the possibility is not ruled out of using complex movement apparatuses (such as Cartesian manipulators or anthropomorphic manipulators) for particularly complex applications.

With particular reference to a first embodiment of the device 1 according to the invention, the at least one movement element 2a can advantageously be associated with the alignment means 2.

The alignment means 2 can conveniently comprise a pair of superimposed plates 4, 5 which are provided with complementary slots 6, 7 for the temporary accommodation of groups of free ends B of conductive elements A.

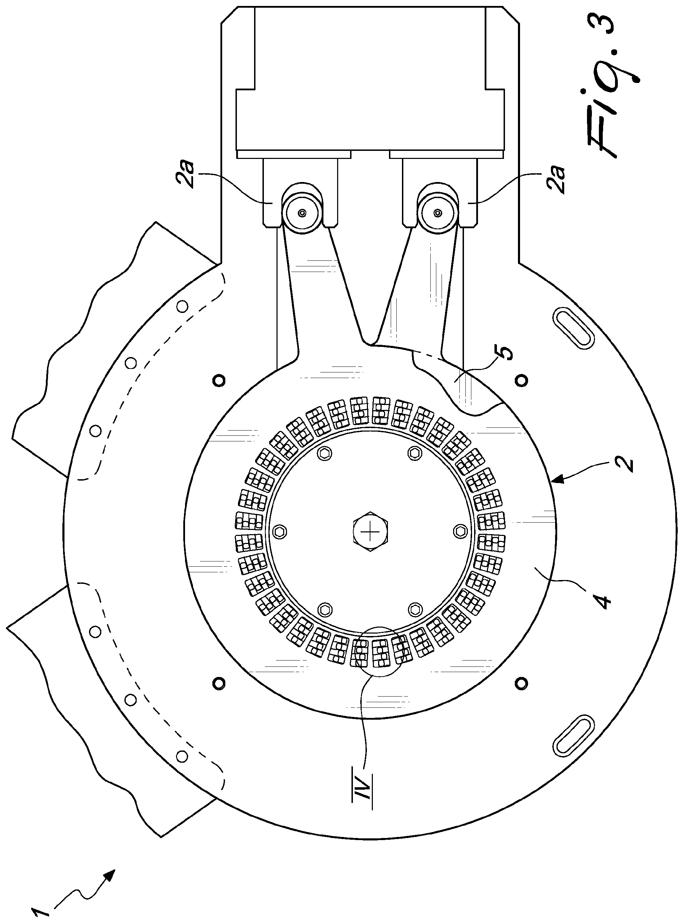

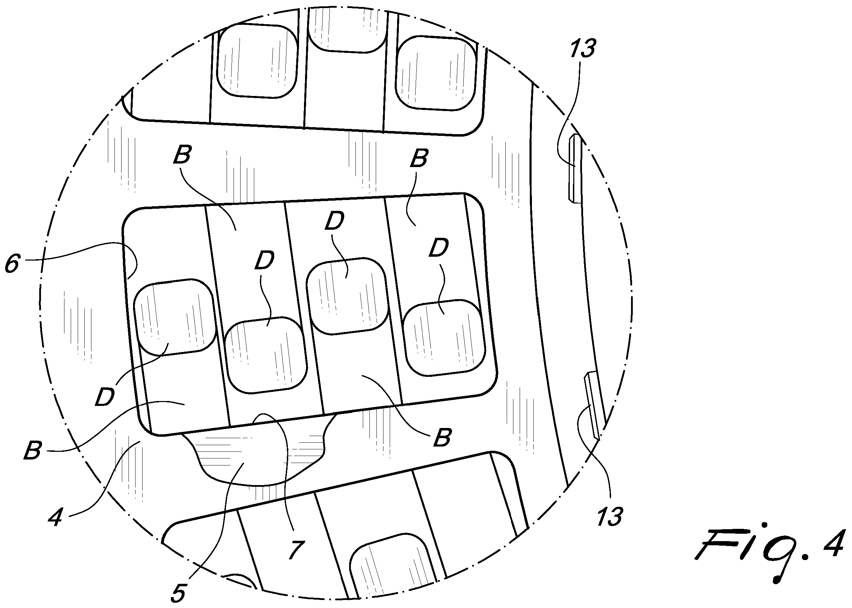

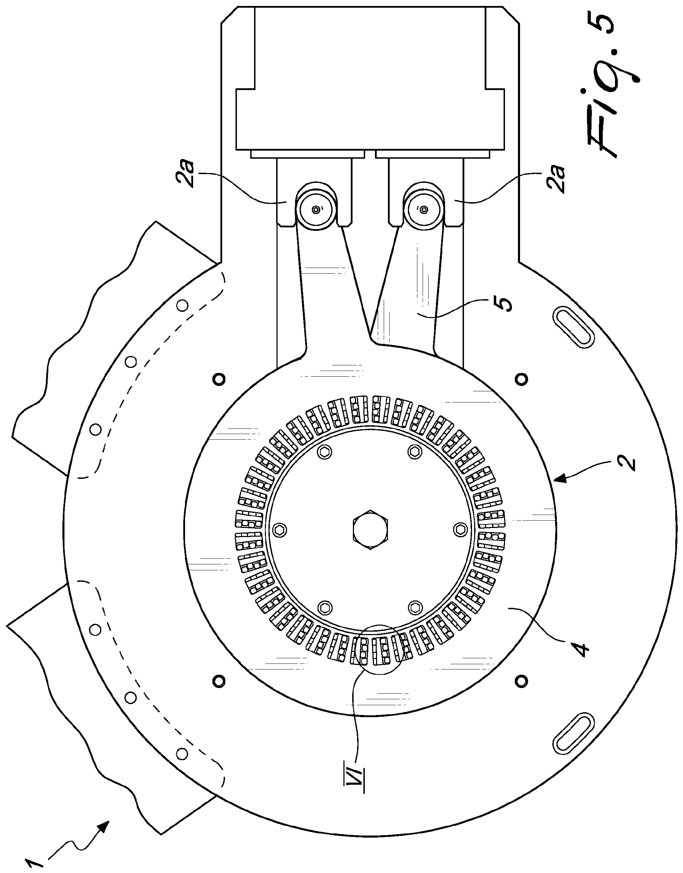

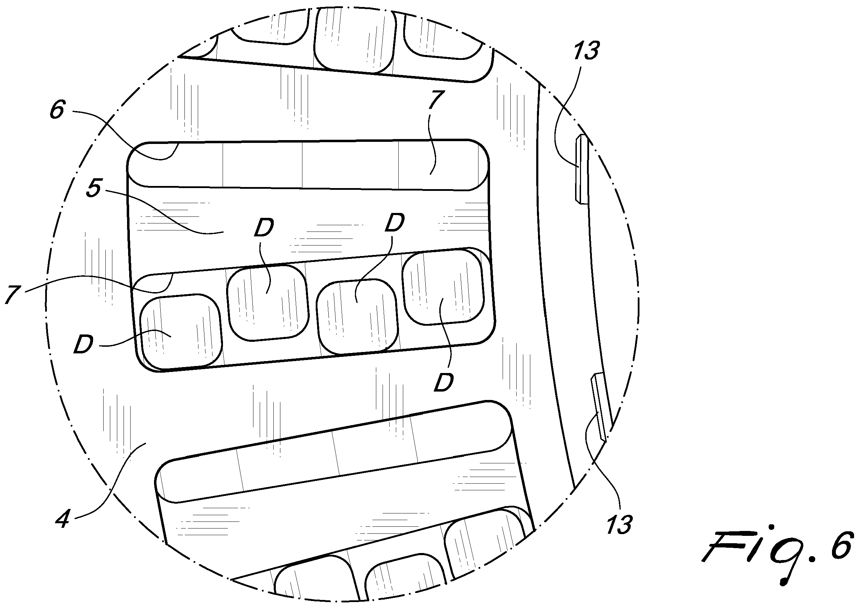

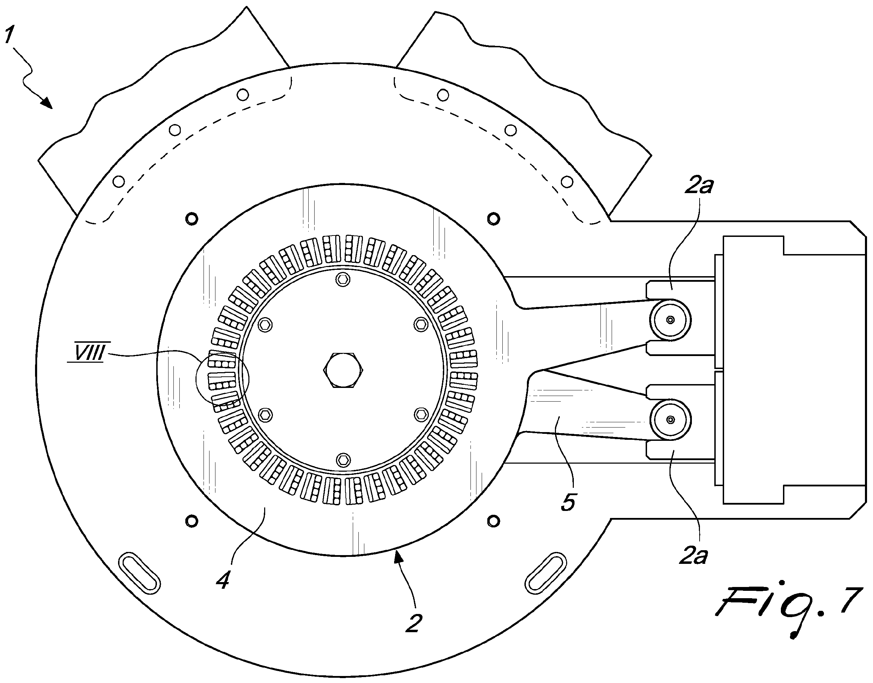

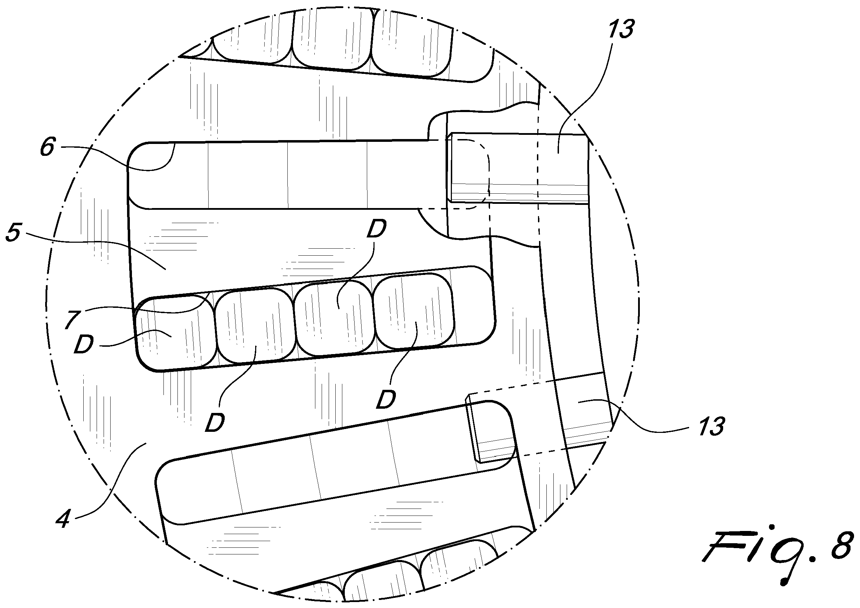

The mutual rotation of the plates 4, 5 will profitably produce the transition from a configuration of alignment of the complementary slots 6, 7 (shown by way of non-limiting example in the accompanying Figures 3 and 4), which corresponds to an accommodation with play of the respective group of free ends B, to an offset configuration of such complementary slots 6, 7 (shown by way of non-limiting example in the accompanying Figures 7, 8), which corresponds to a substantial clamping of the respective group of free ends B. Between the two cited limit configurations, there can be intermediate configurations (one of these is shown by way of non-limiting example in the accompanying Figures 5, 6), which correspond to successive steps of progressive mutual alignment of the heads D of the free ends B of the elements A of each individual group.

The plates 4, 5 can advantageously be associated with the at least one movement element 2a for the distancing thereof from the groups of free ends B of conductive elements A: such movement (removal) of the plates 4, 5 will make the heads D of the free ends B of the conductive elements A freely accessible from outside, thus making possible the subsequent and optional operations necessary for their coupling.

Within such embodiment, it should be noted that the alignment means 2 will advantageously be superimposed on the compaction means 3 so that the movement element 2a will move the alignment means 2 away, while the compaction means 3 remain clamped in order to allow subsequent operations of coupling the heads D.

With particular reference to an alternative embodiment, the at least one movement element 3a can be positively associated with compaction means 3.

The compaction means 3 can usefully comprise radial pushers 8, 13 which are arranged along an outline of the free ends B.

In particular such free ends B of the conductive elements A which protrude from the ferromagnetic core E (for example from the stator or from the rotor of an electric machine) will be ringed by the pushers 8, 13, which will be movable between a first configuration, in which they face and are proximate to respective free ends B of at least one respective group of conductive elements A, and a second configuration, in which they will abut against the free ends B of at least one group, forcing them, in so doing producing a deformation thereof, to abut against each other.

In particular, if the core has a circular cross-section, the pushers 8 will be arranged radially around the circular outline defined by the free ends B of the elements A and, in the transition from the first to the second configuration, will come to abut against the outer surfaces of the outline of such free ends B, pushing them with a centripetal action against each other (so bringing the respective heads D into contact).

In general terms, the radial pushers 8, 13 can conveniently comprise a pair of mutually opposite pushers with the free ends B of each group of conductive elements A interposed. The pushers of each pair will profitably be configured to move toward/away from each other respectively in order to compact or release the respective group of conductive elements A that is interposed between them.

Purely for the purposes of non-limiting example, it should be noted that the pushers 8 can be constituted by radial shanks 9 which have, at a first outer end, a cursor 10 which can slide into a respective inclined slot 11 provided on a supporting disk 12: a rotation of the disk 12 will produce a movement of the cursor 10 along the slot 11 and this will imply a translation in a radial direction of each shank 9. In this manner it will be possible to simultaneously actuate all the pushers 8 in order to produce the compaction of the heads D of the first ends B of the conductive elements A of each group.

Further and separate embodiments for the pushers 3 are envisaged.

The possibility is not ruled out, for example, of there being further push tappets 13 (which therefore also act as pushers) which are adapted to act in opposition to the pushers 8 or independently.

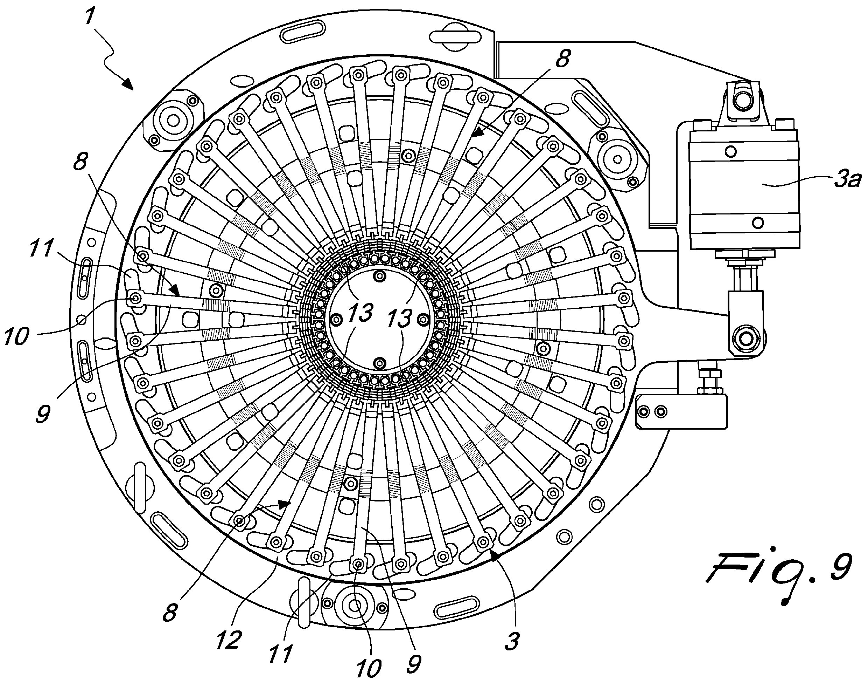

The push tappets 13 could be arranged (in conformance with what is shown by way of non-limiting example in Figure 9) on the inner surface of the outline that delimits the first ends B, and be constrained so that they can slide only in a radial direction. By means of the passing of a suitable apparatus for actuating (for example a frustum-shaped collar), it will be possible to force the push tappets 13 to move in a radial direction and in a centrifugal direction, so making them abut against the free ends B in order to compact them and thus bring the heads D into mutual contact.

By virtue of the device 1, therefore, it is possible to remove either the alignment means 2 or the compaction means 3, using the respective movement element 2a, 3a, thus releasing a terminal portion of the free ends B corresponding to the head D of the conductive elements A. On such terminal portion corresponding to the head D, the operations for mutual coupling, for example welding, can be performed in order to close the circuit that constitutes the inductive windings.

This will make it possible to use alignment means 2 and compaction means 3 of standard thickness, or indeed greater than standard, and/or to have inductive windings with free ends B (protruding from the ferromagnetic core E) of reduced length (with consequent reduction of the overall space occupation, as required in general by end users).

These aspects are particularly important in the stators of electric motors (or electricity generators) in that the axial space occupation must necessarily be contained within predefined limits owing to limited installation space: for example in vehicle motors, the available spaces are limited and rigidly defined.

Advantageously the present invention solves the above mentioned problems, by providing a method for the alignment of conductive elements A of inductive windings that facilitates the subsequent operations of coupling the heads D of the free ends B of the conductive elements A. In fact the terminal portion of the free ends B, which protrudes with respect to the one of either the alignment means 2 or the compaction means 3 which will be clamping it during the operations for coupling, will be easily accessible, even though its distance with respect to the ferromagnetic core E is limited (in conformance with the requirements of the end user of the component under construction).

Conveniently the method and the device 1 according to the invention can operate on free ends B of conductive elements A of reduced length, and this is because, by virtue of the removal of either the alignment means 2 or the compaction means 3 (and the locking together of the group of free ends B with the other one of either the compaction means 3 or the alignment means 2), the portion of head D that was initially clamped by either the alignment means 2 or the compaction means 3 will be free and accessible during the subsequent operations for coupling the heads D.

Positively the device 1 according to the invention is provided with clamping elements that offer good mechanical strength. The removal of either the alignment means 2 or the compaction means 3 makes it possible in fact to make them of generous thickness, given that in any case such thickness will not make it necessary to increase the length of the free ends B of the elements A in consideration of the fact that either the alignment means 2 or the compaction means 3 will be removed in order to allow the operations for coupling (and its thickness will correspond to the length of the portion of head D of the ends B of the elements A that will be free after the removal of that alignment means 2 or compaction means 3).

The device 1 according to the invention is advantageously provided with clamping elements that are less prone to faults and malfunctions. The ability to envisage generous dimensioning (standard or even greater thickness, instead of the reduced thickness in some conventional implementation solutions) of the alignment means 2 and of the compaction means 3 ensure that these will be less prone to faults and malfunctions.

Advantageously the method and the device 1 according to the invention ensure the possibility of producing windings with reduced space occupation (owing to the fact that it will not be necessary to have long length of the free ends B of the elements A in order to allow the coupling of the heads D).

Conveniently the method and the device 1 according to the invention ensure the possibility of easily proceeding with the mutual welding of the terminal heads D of the free ends B of the conductive elements A, while the free ends B are locked together in a predefined configuration of mutual alignment. This is made possible by virtue of the fact that during the operations of welding (or any other operation for coupling) the free ends B will be clamped solely by either the alignment means 2 or the compaction means 3, while the other one (of either the compaction means 3 or the alignment means 2) will have been removed.

Positively the method and the device 1 according to the invention are easily and practically implemented and of low cost: such characteristics render the method and the device 1 according to the invention innovations that are certain to be safe in use.

The invention thus conceived is susceptible of numerous modifications and variations, provided that these are within the scope of the appended claims. Moreover, all the details may be substituted by other, technically equivalent elements, provided that this is within the scope of the appended claims.

In the embodiments illustrated, individual characteristics shown in relation to specific examples may in reality be interchanged with other, different characteristics, existing in other embodiments, provided that this is within the scope of the appended claims.

In practice, the materials employed, as well as the dimensions, may be any according to requirements and to the state of the art.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A method for the alignment and the compaction of conductive elements (A) of inductive windings of a ferromagnetic core, in which groups of conductive elements (A) are accommodated beforehand in respective slots of a ferromagnetic core (E) which has a longitudinal central axis of symmetry (Y), keeping corresponding free ends (B) of the elements (A) protruding from a terminal opening of each slot, wherein the method comprises the following steps:
- clamping each group of conductive elements (A) in order to align the respective free ends (B) according to a radial direction, directed radially with respect to the outline of the ferromagnetic core (E) from which said free ends (B) protrude, using alignment means (2), which operate according to an angular stroke and lie on a plane that is perpendicular to the central axis of symmetry (Y);
- clamping each group of conductive elements (A) in order to compact the respective free ends (B) according to the radial direction, using compaction means (3), which operate according to the radial direction, acting on a plane that is perpendicular to the central axis of symmetry (Y); **characterized in that** the method comprises the following step:
- removing either said alignment means (2) or said compaction means (3) to a distance from the ferromagnetic core (E) that is greater than the operating space occupation of apparatuses for coupling heads (D) of the free ends (B) of each group of conductive elements (A), keeping the groups clamped using only the other one of either said compaction means (3) or said alignment means (2).

2. The method according to claim 1, **characterized in that** said step of removing consists in moving said alignment means (2) to a distance from the ferromagnetic core (E) that is greater than the operating space occupation of the apparatuses for coupling said heads (D), while the compaction means (3) clamp the terminal ends (B) of the conductive elements (A) of the respective group.

3. The method according to claim 1 and as an alternative to claim 2, **characterized in that** said step of removing consists in moving said compaction means (3) to a distance from the ferromagnetic core (E) that is greater than the operating space occupation of the apparatuses used during the step of coupling said heads (D), while the alignment means (2) clamp the terminal ends (B) of the conductive elements (A) of the respective group.

4. The method according to one or more of the preceding claims, **characterized in that** said step of clamping each group of conductive elements (A) using compaction means (3) is activated before the completion of the step of clamping each group of conductive elements (A) using alignment means (2).

5. A method for the coupling of conductive elements (A) of inductive windings of a ferromagnetic core, **characterized in that**, at the end of a method for alignment and compaction according to any of the preceding claims, it further comprises a step of:
- mutually coupling the heads (D) of free ends (B) of each group of conductive elements (A) that protrude from the only compaction means (3) or alignment means (2) that clamps them.

6. The method according to claim 5, **characterized in that** said step of mutual coupling of said heads (D) of the free ends (B) of said groups of conductive elements (A) comprises a technique chosen from welding, clamping with a vise, clamping with a rivet, clamping with threaded means, clamping with a perimetric ring.

7. A device for the alignment and the compaction of conductive elements (A) of inductive windings, said conductive elements (A) having free ends (B) protruding from a ferromagnetic core (E) and joined in groups, said device (1) comprising alignment means (2) which are configured for the alignment according to a respective radial direction of the free ends (B) that form each group, and compaction means (3) which are configured for the compaction along said radial direction of the free ends (B) of the conductive elements (A) that form each group, with consequent juxtaposition of their proximate and facing surfaces, **characterized in that** it comprises at least one movement element (2a, 3a) for moving only one of either said alignment means (2) or said compaction means (3) between a first arrangement, of substantial overlap on the other one of either said alignment means (2) or said compaction means (3), in which said alignment means (2) and said compaction means (3) respectively perform the alignment and the radial compaction of the free ends (B) of the conductive elements (A), and a second arrangement, of being spaced apart from the other one of either said compaction or alignment means (3, 2), in which the alignment or compaction means that was moved by the movement element (3a, 2a) is moved to a distance, from the compaction means (3) or alignment means (2) that was not moved by the movement element (3a, 2a), that is greater than the operating space occupation of apparatuses for coupling said heads (D), and **in that** the compaction means (3) or alignment means (2) that were not moved by the movement element (3a, 2a) are configured to continue to keep clamped the groups that were radially aligned and compacted, while the movement element (2a, 3a) is brought to said second arrangement.

8. The device according to claim 7, **characterized in that** said at least one movement element (2a) is associated with said alignment means (2).

9. The device according to one or more of claims 7 and 8, **characterized in that** said alignment means (2) comprise a pair of superimposed plates (4, 5) which are provided with complementary slots (6, 7) for the temporary accommodation of groups of said free ends (B) of said conductive elements (A), the mutual rotation of said plates (4, 5) producing the transition from a configuration of alignment of said complementary slots (6, 7), which corresponds to an accommodation with play of the respective group of free ends (B), to an offset configuration of said complementary slots (6, 7), which corresponds to a substantial clamping of the respective group of free ends (B).

10. The device according to one or more of claims 7 to 9, **characterized in that** said alignment means (2) are superimposed on said compaction means (3) so that said movement element (2a) will move said alignment means (2) away, while said compaction means (3) remain clamped in order to allow subsequent operations of coupling the heads (D).

11. The device according to one or more of claims 7 to 9, **characterized in that** said compaction means (3) comprise radial pushers (8, 13) which are arranged along an outline of said free ends (B), of said conductive elements (A), which protrude from said ferromagnetic core (E), said pushers (8, 13) being movable between a first configuration, in which they face and are proximate to respective free ends (B) of at least one respective group of conductive elements (A), and a second configuration, in which they abut against said free ends (B) of said at least one group, forcing them to abut against each other and so producing a deformation thereof.

12. The device according to claim 11, **characterized in that** said radial pushers (8, 13) comprise a pair of mutually opposite pushers with said free ends (B) of each group of said conductive elements (A) interposed, the pushers of each pair being configured to move toward/away from each other respectively in order to compact or release the respective group of conductive elements (A) that is interposed between them.

## Patentansprüche

1. Ein Verfahren zur Ausrichtung und Verdichtung leitfähiger Elemente (A) von induktiven Wicklungen eines ferromagnetischen Kerns, worin Gruppen leitfähiger Elemente (A) zuvor in entsprechenden Schlitzen eines ferromagnetischen Kerns (E) aufgenommen werden, der eine zentrale Symmetrie-Längsachse (Y) hat, wobei entsprechende freie Enden (B) der Elemente (A) von einer abschließenden Öffnung jedes Schlitzes vorstehend gehalten werden, wobei das Verfahren folgende Schritte umfasst:
- das Klemmen jeder Gruppe leitfähiger Elemente (A), um die jeweiligen freien Enden (B) entsprechend einer radialen Richtung auszurichten, radial ausgerichtet mit Bezug auf die Außenlinie des ferromagnetischen Kerns (E), von dem die freien Enden (B) vorstehen, mit Hilfe von Ausrichtungsmitteln (2),
die entsprechend einem Winkelhub arbeiten und auf einer Ebene liegen, die senkrecht zur zentralen Symmetrieachse (Y) ist;
- das Klemmen jeder Gruppe leitfähiger Elemente (A), um die jeweiligen freien Enden (B) entsprechend der radialen Richtung zu verdichten, mit Hilfe von Verdichtungsmitteln (3), die in der radialen Richtung auf einer Ebene arbeiten, welche senkrecht zur zentralen Symmetrieachse (Y) ist; **dadurch gekennzeichnet, dass** das Verfahren folgenden Schritt umfasst:
- das Entfernen entweder der Ausrichtungsmittel (2) oder der Verdichtungsmittel (3) vom ferromagnetischen Kern (E) um einen Abstand, der größer ist als der Arbeitsplatzbedarf von Vorrichtungen zur Kopplung von Köpfen (D) der freien Enden (B) jeder Gruppe leitender Elemente (A), wobei die Gruppen mit Hilfe nur der anderen von entweder den Verdichtungsmitteln (3) oder den Ausrichtungsmitteln (2) geklemmt gehalten werden.

2. Das Verfahren gemäß Anspruch 1, **dadurch gekennzeichnet, dass** der Schritt des Entfernens im Bewegen der Ausrichtungsmittel (2) vom ferromagnetischen Kern (E) um einen Abstand besteht, der größer ist als der Arbeitsplatzbedarf der Vorrichtungen zur Kopplung der Köpfe (D), während die Verdichtungsmittel (3) die abschließenden Enden (B) der leitenden Elemente (A) der jeweiligen Gruppe klemmen.

3. Das Verfahren gemäß Anspruch 1 und alternativ gemäß Anspruch 2, **dadurch gekennzeichnet, dass** der Schritt des Entfernens darin besteht, die Verdichtungsmittel (3) um einen Abstand vom ferromagnetischen Kern (E) zu entfernen, der größer ist als der Arbeitsplatzbedarf der Vorrichtungen, die während des Schritts der Kopplung der Köpfe (D) verwendet werden, während die Ausrichtungsmittel (2) die abschließenden Enden (B) der leitfähigen Elemente (A) der jeweiligen Gruppe klemmen.

4. Das Verfahren gemäß einem oder mehreren der obigen Ansprüche, **dadurch gekennzeichnet, dass** der Schritt des Klemmens jeder Gruppe leitfähiger Elemente (A) mit Hilfe von Verdichtungsmitteln (3) vor Beendigung des Schritts des Klemmens jeder Gruppe leitfähiger Elemente (A) mit Hilfe von Ausrichtungsmitteln (2) eingeleitet wird.

5. Ein Verfahren zum Koppeln leitfähiger Elemente (A) von induktiven Wicklungen eines ferromagnetischen Kerns, **dadurch gekennzeichnet, dass** es am Ende eines Verfahrens zum Ausrichten und Verdichten gemäß einem beliebigen der obigen Ansprüche weiter folgenden Schritt umfasst:
- das Miteinander-Koppeln der Köpfe (D) freier Enden (B) jeder Gruppe leitfähiger Elemente (A), die von den einzigen Verdichtungsmitteln (3) oder Ausrichtungsmitteln (2), die sie klemmen, vorstehen.

6. Das Verfahren gemäß Anspruch 5, **dadurch gekennzeichnet, dass** der Schritt des Miteinander-Koppelns der Köpfe (D) der freien Enden (B) der Gruppen leitfähiger Elemente (A) eine Technik umfasst, die gewählt ist aus Schweißen, Klemmen mit einem Schraubstock, Klemmen mit einem Niet, Klemmen mit Gewindemitteln, Klemmen mit einem Umfangsring.

7. Eine Vorrichtung zum Ausrichten und Verdichten leitfähiger Elemente (A) induktiver Wicklungen, wobei die leitfähigen Elemente (A) freie Enden (B) haben, die von einem ferromagnetischen Kern (E) vorstehen und in Gruppen verbunden sind; wobei die Vorrichtung (1) Ausrichtungsmittel (2) umfasst, die zum Ausrichten der freien Enden (B), die jede Gruppe bilden, in eine entsprechende radiale Richtung konfiguriert sind, und Verdichtungsmittel (3), die zum Verdichten der freien Enden (B) der leitfähigen Elemente (A), die jede Gruppe bilden, in der radialen Richtung konfiguriert sind, mit daraus folgender Anordnung ihrer angrenzenden und zugewandten Oberflächen nebeneinander; **dadurch gekennzeichnet, dass** sie mindestens ein Bewegungselement (2a, 3a) zum Bewegen nur eines entweder der Ausrichtungsmittel (2) oder der Verdichtungsmittel (3) zwischen einer ersten Anordnung substantieller Überlappung über das andere von entweder den Anordnungsmitteln (2) oder den Verdichtungsmitteln (3), in welcher die Anordnungsmittel (2) und die Verdichtungsmittel (3) die Ausrichtung beziehungsweise die radiale Verdichtung der freien Enden (B) der leitfähigen Elemente (A) vornehmen, und einer zweiten Anordnung der Beabstandung von dem anderen entweder der Verdichtungs- oder der Ausrichtungsmittel (3, 2) umfasst, in welcher das Ausrichtungs- oder Verdichtungsmittel, das vom Bewegungselement (3a, 2a) bewegt wurde, um einen Abstand von dem Verdichtungsmittel (3) oder dem Ausrichtungsmittel (2) entfernt wird, das nicht vom Bewegungselement (3a, 2a) bewegt wurde, welcher größer ist als der Arbeitsplatzbedarf von Vorrichtungen zur Kopplung der Köpfe (D); und dadurch, dass die Verdichtungsmittel (3) oder Ausrichtungsmittel (2), die nicht vom Bewegungselement (3a, 2a) bewegt wurden, konfiguriert sind, um die Gruppen weiterhin geklemmt zu halten, die radial ausgerichtet und verdichtet wurden, während das Bewegungselement (2a, 3a) in die zweite Anordnung gebracht wird.

8. Die Vorrichtung gemäß Anspruch 7, **dadurch gekennzeichnet, dass** das mindestens eine Bewegungselement (2a) mit den Ausrichtungsmitteln (2) verknüpft ist.

9. Die Vorrichtung gemäß einem oder mehreren der Ansprüche 7 und 8, **dadurch gekennzeichnet, dass** die Ausrichtungsmittel (2) ein Paar übereinander gelegter Platten (4, 5) umfassen, die mit komplementären Schlitzen (6, 7) für die vorübergehende Aufnahme von Gruppen der freien Enden (B) der leitfähigen Elemente (A) ausgestattet sind, wobei die Drehung der Platten (4, 5) im Verhältnis zueinander den Übergang aus einer Konfiguration des Fluchtens der komplementären Schlitze (6, 7), die einer Aufnahme der jeweiligen Gruppe von freien Enden (B) mit Spiel entspricht, in eine versetzte Konfiguration der komplementären Schlitze (6, 7) veranlasst, welche einer substantiellen Klemmung der jeweiligen Gruppe freier Enden (B) entspricht.

10. Die Vorrichtung gemäß einem oder mehreren der Ansprüche 7 bis 9, **dadurch gekennzeichnet, dass** die Ausrichtungsmittel (2) so über die Verdichtungsmittel (3) gelegt sind, dass das Bewegungselement (2a) die Ausrichtungsmittel (2) wegbewegt, während die Verdichtungsmittel (3) geklemmt bleiben, um anschließende Arbeiten der Kopplung der Köpfe (D) zu ermöglichen.

11. Die Vorrichtung gemäß einem oder mehreren der Ansprüche 7 bis 9, **dadurch gekennzeichnet, dass** die Verdichtungsmittel (3) radiale Schieber (8, 13) umfassen, die entlang einer Außenlinie der freien Enden (B) der leitfähigen Elemente (A) angeordnet sind, die von dem ferromagnetischen Kern (E) vorstehen, wobei die Schieber (8, 13) beweglich sind zwischen einer ersten Konfiguration, in welcher sie entsprechenden freien Enden (B) mindestens einer entsprechenden Gruppe leitfähiger Elemente (A) zugewandt sind und an sie angrenzen, und einer zweiten Konfiguration, in welcher sie an den freien Enden (B) der mindestens einen Gruppe anliegen und sie so zwingen, aneinander anzuliegen, und so eine Verformung derselben auslösen.

12. Die Vorrichtung gemäß Anspruch 11, **dadurch gekennzeichnet, dass** die radialen Schieber (8, 13) ein Paar einander gegenüberliegender Schieber umfassen, wobei die freien Enden (B) jeder Gruppe der leitfähigen Elemente (A) dazwischen angeordnet sind, wobei die Schieber jedes Paares ausgebildet sind, um sich zueinander hin beziehungsweise voneinander fort zu bewegen, um die jeweilige Gruppe leitfähiger Elemente (A), die zwischen ihnen angeordnet ist, zu verdichten oder freizugeben.

## Revendications

1. Procédé d'alignement et de compactage d'éléments conducteurs
(A) d'enroulements inductifs d'un noyau ferromagnétique, dans lequel des groupes d'éléments conducteurs (A) sont préalablement logés dans des fentes respectives d'un noyau ferromagnétique (E) présentant un axe central de symétrie longitudinal (Y), en maintenant extrémités libres correspondantes
(B) des éléments (A) dépassant d'une ouverture d'extrémité de chaque fente, le procédé comprenant les étapes suivantes :
- serrer chaque groupe d'éléments conducteurs (A) afin d'aligner les extrémités libres respectives (B) selon une direction radiale, orientée radialement par rapport au contour du noyau ferromagnétique (E) d'où dépassent lesdites extrémités libres (B), à l'aide de moyens d'alignement (2),
qui fonctionnent selon une course angulaire et se situent sur un plan perpendiculaire à l'axe central de symétrie (Y) ;
- serrer chaque groupe d'éléments conducteurs (A) afin de compacter les extrémités libres respectives (B) selon la direction radiale, à l'aide de moyens de compactage (3), qui fonctionnent selon la direction radiale, agissant sur un plan perpendiculaire à l'axe central de symétrie (Y);
**caractérisé en ce que** le procédé comprend l'étape suivante:
- retirer soit lesdits moyens d'alignement (2), soit lesdits moyens de compactage (3) jusqu'à une distance du noyau ferromagnétique (E) supérieure à l'encombrement de fonctionnement des dispositifs de couplage de têtes (D) des extrémités libres (B) de chaque groupe d'éléments conducteurs (A), en maintenant les groupes serrés à l'aide uniquement de l'autre parmi lesdits moyens de compactage (3) ou lesdits moyens d'alignement (2).

2. Procédé selon la revendication 1, **caractérisé en ce que** ladite étape de retirement consiste à déplacer lesdits moyens d'alignement (2) à une distance du noyau ferromagnétique (E) qui est supérieure à l'encombrement en fonctionnement des dispositifs destinés à coupler lesdites têtes (D), tandis que les moyens de compactage (3) maintiennent serrées les extrémités terminales (B) des éléments conducteurs (A) du groupe respectif.

3. Procédé selon la revendication 1 et, à titre alternatif à la revendication 2, **caractérisé en ce que** ladite étape de retirement consiste à déplacer lesdits moyens de compactage (3) à une distance du noyau ferromagnétique (E) qui est supérieure à l'encombrement en fonctionnement des dispositifs utilisés lors de l'étape de couplage desdites têtes (D), tandis que les moyens d'alignement (2) serrent les extrémités (B) des éléments conducteurs (A) du groupe concerné.

4. Procédé selon une ou plusieurs des revendications précédentes, **caractérisé en ce que** ladite étape de serrage de chaque groupe d'éléments conducteurs (A) en utilisant des moyens de compactage (3) est déclenchée avant l'achèvement de l'étape de serrage de chaque groupe d'éléments conducteurs (A) en utilisant des moyens d'alignement (2).

5. Procédé d'accouplement d'éléments conducteurs (A) d'enroulements inductifs d'un noyau ferromagnétique, **caractérisé en ce qu'**à l'issue d'un procédé d'alignement et de compactage selon l'une quelconque des revendications précédentes, il comprend en outre une étape consistant à :
- coupler mutuellement les têtes (D) des extrémités libres (B) de chaque groupe d'éléments conducteurs (A) qui dépassent des seuls moyens de compactage (3) ou moyens d'alignement (2) qui les serrent.

6. Procédé selon la revendication 5, **caractérisé en ce que** ladite étape de couplage mutuel desdites têtes (D) des extrémités libres (B) desdits groupes d'éléments conducteurs (A) comprend une technique choisie parmi le soudage, le serrage à l'aide d'un étau, le serrage à l'aide d'un rivet, le serrage à l'aide de moyens filetés, le serrage à l'aide d'une bague périmétrique.

7. Dispositif pour l'alignement et le compactage d'éléments conducteurs (A) d'enroulements inductifs, lesdits éléments conducteurs (A) présentant des extrémités libres (B) faisant saillie d'un noyau ferromagnétique (E) et regroupés, ledit dispositif (1) comprenant des moyens d'alignement (2) qui sont configurés pour l'alignement selon une direction radiale respective des extrémités libres (B) formant chaque groupe, et des moyens de compactage (3) configurés pour le compactage, le long de ladite direction radiale, des extrémités libres (B) des éléments conducteurs (A) formant chaque groupe, avec pour conséquence la juxtaposition de leurs surfaces proches et en regard, **caractérisé en ce qu'**il comprend au moins un élément de déplacement (2a, 3a) destiné à déplacer uniquement l'un desdits moyens d'alignement (2) ou desdits moyens de compactage (3) entre une première configuration, de chevauchement substantiel sur l'autre desdits moyens d'alignement (2) ou desdits moyens de compactage (3), dans laquelle lesdits moyens d'alignement (2) et lesdits moyens de compactage (3) effectuent respectivement l'alignement et le compactage radial des extrémités libres (B) des éléments conducteurs (A), et une seconde configuration, dans laquelle ils sont espacés l'un de l'autre, c'est-à-dire de l'autre desdits moyens de compactage ou d'alignement (3, 2), dans laquelle le moyen d'alignement ou de compactage qui a été déplacé par l'élément de déplacement (3a, 2a) est éloigné du moyen de compactage (3) ou du moyen d'alignement (2) qui n'a pas été déplacé par l'élément de déplacement (3a, 2a), par un écart, qui est supérieur à l'encombrement en fonctionnement des dispositifs destinés à accoupler lesdites têtes (D), et **en ce que** les moyens de compactage (3) ou les moyens d'alignement (2) qui n'étaient pas déplacés par l'élément de déplacement (3a, 2a) sont configurés pour continuer à maintenir serrés les groupes qui ont été alignés et compactés radialement, tandis que l'élément de déplacement (2a, 3a) est amené dans ladite deuxième configuration.

8. Dispositif selon la revendication 7, **caractérisé en ce que** ledit au moins un élément de déplacement (2a) est associé auxdits moyens d'alignement (2).

9. Dispositif selon une ou plusieurs des revendications 7 et 8, **caractérisé en ce que** lesdits moyens d'alignement (2) comprennent une paire de plaques superposées (4, 5) qui sont pourvues de fentes complémentaires (6, 7) destinées à recevoir temporairement des groupes desdites extrémités libres (B) desdits éléments conducteurs (A), la rotation mutuelle desdites plaques (4, 5) provoquant le passage d'une configuration d'alignement desdites fentes complémentaires (6, 7), qui correspond à un logement avec jeu du groupe respectif d'extrémités libres (B), à une configuration décalée desdites fentes complémentaires (6, 7), qui correspond à un serrage substantiel du groupe respectif d'extrémités libres (B).

10. Dispositif selon l'une ou plusieurs des revendications 7 à 9, **caractérisé en ce que** lesdits moyens d'alignement (2) sont superposés auxdits moyens de compactage (3) de telle sorte que ledit élément de déplacement (2a) éloigne lesdits moyens d'alignement (2), tandis que lesdits moyens de compactage (3) restent serrés afin de permettre les opérations ultérieures d'accouplement des têtes (D).

11. Dispositif selon l'une ou plusieurs des revendications 7 à 9, **caractérisé en ce que** lesdits moyens de compactage (3) comprennent des poussoirs radiaux (8, 13) qui sont disposés le long d'un contour desdites extrémités libres (B) desdits éléments conducteurs (A), faisant saillie dudit noyau ferromagnétique (E), lesdits poussoirs (8, 13) pouvant se déplacer entre une première configuration, dans laquelle ils font face et sont proches des extrémités libres respectives (B) d'au moins un groupe respectif d'éléments conducteurs (A), et une seconde configuration, dans laquelle ils viennent en butée contre lesdites extrémités libres (B) dudit au moins un groupe, les forçant à venir en butée les unes contre les autres et provoquant ainsi leur déformation.

12. Dispositif selon la revendication 11, **caractérisé en ce que** lesdits poussoirs radiaux (8, 13) comprennent une paire de poussoirs mutuellement opposés entre lesquels sont intercalées lesdites extrémités libres (B) de chaque groupe desdits éléments conducteurs (A), les poussoirs de chaque paire étant configurés pour se rapprocher ou s'éloigner l'un de l'autre respectivement afin de compacter ou de relâcher le groupe respectif d'éléments conducteurs (A) qui est intercalé entre eux.
